# EUROPÄISCHE PATENTSCHRIFT

(11) **EP 1 134 606 B1**
(45) Veröffentlichungstag und Bekanntmachung des Hinweises auf die Patenterteilung: **10.04.2002**
(21) Anmeldenummer: 00100890.3
(22) Anmeldetag: 18.01.2000
(51) Int. Cl.: G02B 9/64

(54) **Projektionsobjektiv**
Projection lens
Lentille de projection

(43) Veröffentlichungstag der Anmeldung: 19.09.2001
(73) Patentinhaber: ISCO-OPTIC GMBH, 37081 Göttingen (DE); Reinecke, Wolfgang, Dr.-Ing., Ingenieurbüro für Optik-Entwicklung, 12489 Berlin (DE)
(72) Erfinder: Reinecke, Wolfgang Dr.-Ing., 12489 Berlin-Adlershof (DE); Linge, Horst Dr., 34260 Kaufungen (DE)
(74) Vertreter: Quermann, Helmut, Dipl.-Ing.

(56) Entgegenhaltungen:
- EP-A- 0 585 651
- DE-A- 3 029 916
- DE-A- 3 029 929
- DE-A- 3 633 032
- DE-A- 3 833 946
- US-A- 2 701 982
- US-A- 2 897 724
- US-A- 3 005 379
- US-A- 4 704 011
- US-A- 4 812 027

## Beschreibung

### Anwendungsgebiet:

Hauptanwendungsgebiet der Erfindung ist die Kinoprojektion, insbesondere die von 35mm Film.

### Charakteristik der bekannten technischen Lösungen und Problemstellung:

Die Erfindung betrifft ein lichtstarkes Projektionsobjektiv. Bekannte Objektive dieser Art (DE-OS 3833946) sind konzipiert für die Erfordernisse der Projektion, wobei vor allem die Güte der Abbildungsqualität im Vordergrund steht. Das hat über viele Jahre zu einer Vielzahl von modifizierten Doppef-Gauß-Objektiven (DE-OS 3633032, US-PS 4704011) geführt, die vor allem das Ziel verfolgten, die Abbildungsfehler weiter zu reduzieren. Die Folge dieser Entwicklung ist unter anderem, daß sich die Blende in vorteilhafter Weise, vorzugsweise in dem für Doppel-Gauß-Objektive charakteristischen größeren Luftraum zwischen den hohlen Innenflächen der meniskenförmigen Linsen befindet. Diese für die Korrektion der Abbildungsfehler vorteilhafte Lage hat aber für die Projektion entscheidende Nachteile, weil die daraus resultierende Lage der Eintrittspupille beleuchtungsseitig nicht optimal angepaßt ist. In den Schriften DE-OS 3029929 und DE-OS 3029916 wird auf die Lage der Pupillen und deren Bedeutung in Bezug auf die Kondensoranpassung bei der Projektion hingewiesen. Die Eintrittspupillenlage ist für die optimale Anpassung an die Beleuchtung aber nicht allein entscheidend. Vielmehr muß die Raumwinkelabhängigkeit des partiellen Lichtstroms über das beleuchtete Objektfeld mitberücksichtigt werden. Diese typische Lichtstromverteilungscharakteristik erfordert die Abstimmung aller beleuchtungsrelevanten Parameter des Objektivs: Eintrittspupillenlage, Öffnung und die bündelbegrenzenden Winkel σRBa sowie σRBi. Ist dies nicht der Fall, wie bei den bisher bekannten technischen Lösungen, sind Verluste in der Beleuchtungsstärke der projizierten Bilder die Folge.

### Ziel der Erfindung:

Ziel der Erfindung ist ein Objektiv bzw. eine Objektivserie, welche einerseits die effektivste Ausnutzung der Lichtstromverteilung über das gesamte Objektfeld garantiert und andererseits eine Abbildungsqualität aufweist, die besser oder gleich der Abbildungsqualität der bekannten technischen Lösungen bei der Verwendung von technologisch günstigen Gläsern ist.

### Darlegung des Wesens der Erfindung (Lösung und erreichte Vorteile):

Nach der Erfindung wird diese Aufgabe mit dem Objektiv nach den Merkmalen des Anspruchs 1 gelöst. Das erfindungsgemäße Objektiv zeichnet sich im Vergleich zu den vorgenannten Systemen (DE-OS 3833946) durch die Einhaltung aller Effektivitätsparameter zur Anpassung an die Kondensorsysteme aus. Im einzelnen bedeutet das unter anderem eine Vergrößerung des Öffnungsverhältnisses von 1:2,4 auf 1:1,9 und eine Verringerung der Vignettierung von 61% auf 73% für den äußersten Feldpunkt. Diese beträchtliche Erweiterung der Öffnung sowohl axial als auch außeraxial, wurde errreicht bei gleichbleibender Abbildungsqualität, sämtliche Abbildungsfehler eingeschlossen, im Vergleich zu den vorgenannten Systemen.

Die erfindungsgemäße Gestaltung des Projektionsobjektives unterscheidet sich von bekannten Lösungen gemäß der Schriften US 2 701 982,2 897 724 und 3 005 379 bereits dadurch, daß es sich dort um Systembeispiele mit Kittgliedern handelt. Außerdem ist die Abbildungsqualität dieser Objektive wesentlich schlechter. Darüber hinaus stimmen auch bei den Objektiven der US 2 701 982 und 2 897 724 weder Zahl der Linsen, noch Brechkraftfolge und Linsenform überein. Bei dem System nach der US 3 005 379 ist zwar die Brechkraftfolge identisch, aber nicht die Form. Lediglich die erste und letzte Linse sind in der Form gleich.

Nach Anspruch 1 genügt das erfindungsgemäße Objektiv den aufgestellten Bedingungsgleichungen, die die effektivste Anpassung an die Kondensorsysteme garantieren. Um das Wesen dieses Teils der Erfindung darzulegen, muß etwas ausführlicher auf die Lichtstromverteilung der bei der Kino-Projektion zur Anwendung kommenden Kondensorsysteme eingegangen werden. Unter der Lichtstromverteilung ist die Abhängingkeit des partiellen Lichtstromes vom räumlichen Winkel für ein kleines Flächenelement in der Objektebene zu verstehen. Die Nullachse des Raumwinkels geht durch den betrachteten Feldpunkt und ist parallel zur Achse des Beleuchtungssystems. In der nach diesem kleinen Flächenelement in Projektionsrichtung sich ergebenden räumlichen Lichtstromverteilungscharakteristik sind alle lichttechnisch relevanten Eigenschaften des Kondensorsystems enthalten. Die Lichtstromverteilung ist objektfeldabhängig und weist auf der Achse des Beleuchtungssystems eine nahezu radialsymmetrische Verteilung auf. Für kleine Raumwinkel zur Achse ist der Lichtstrom konstruktiv bedingt Null, steigt dann mit einer steilen Flanke bis zu seinem Spitzenwert an und fällt dann nach außen hin flach ab. Diese Verteilung verändert sich über das Objektfeld nach außen hin. Die Radialsymmetrie geht dabei verloren und das Maximum der Lichtstromverteilung verschiebt sich in die Richtung, in der das Zentrum der Eintrittspupille vom beleuchteten Feldpunkt aus erscheint. In dem Teil des Strahlenbündels, welches an der Raumwinkelachse gespiegelt zum Maximum der Lichtstromverteilung liegt, verringert sich der Lichtstrom erheblich. Sein maximaler Wert beträgt nur noch ein Bruchteil im Vergleich zum anderen Teil des Bündels. Die energetische Verteilung wird damit hochgradig unsymmetrisch.
Ist beispielsweise bei der Abbildung der Randbereiche des Objektfeldes die Objektivapertur u= 14,7° (entspricht einer Blendenzahl von k=1,9 bei einer fiktiven Projektionsentfernung unendlich) und somit der Beleuchtungsapertur gut angepaßt, aber die Lage der Eintrittspupille LEP < 100mm, so hat das zur Folge, daß ein wesentlicher Teil der äußeren Eintrittspupillenfläche, die in Bezug zur optischen Achse dem betrachteten Feldpunkt gegenüber liegt, überhaupt nicht an der Abbildung beteiligt ist und andererseits wesentliche Teile der Lichtstromverteilung in der äußeren Eintrittspupillenfläche, die in Bezug zur optischen Achse auf der gleichen Seite wie der betrachtete Feldpunkt liegt, abgeschnitten werden, auch bei einer nur geringen Vignettierung. Ist dann außerdem die Apertur nur u= 11,8° (entspricht k=2,4) führt das dann zu noch größeren Lichtverlusten, weil Teile in der Umgebung des Lichtstrommaximums beschnitten werden. Dieser Effekt wird bei größeren Vignettierungen noch verstärkt.
Ist dagegen bei einer Apertur von u=14,7° die Lage der Eintrittspupille LEP>400mm, so werden nicht unwesentliche Teile der Lichtstromverteilung durch äußere Eintrittspupillenflächen, die in Bezug zur optischen Achse dem betrachteten Feldpunkt gegenüberliegen, beschnitten und in den äußeren Eintrittspupillenflächen, die in Bezug zur optischen Achse auf der gleichen Seite wie der betrachtete Feldpunkt liegen, hat der Lichtstrom vernachlässigbare Werte. Weiterhin ist zu beachten, daß eine Lage der Eintrittspupille LEP>400mm größere Linsendurchmesser objektseitig zur Folge hat und die Korrektion der Abbildungsfehler erschwert.
Das ist die Realität bei den genannten vorbekannten Systemen(DE-OS 3833946).

Bei dem erfindungsgemäßen Objektiv sind diese entscheidenden Nachteile alle beseitigt. Mit der Apertur von u=14,7° (k=1,9) wird der energetisch wesentliche Teil des Lichtstroms auf der Achse erfaßt. Im Feldbereich sorgen die Lage der Eintrittspupille LEP und die bündelbegrenzenden Winkel σRBa und σRBi dafür, daß das Objektiv für jedes Flächenelement des Feldes den ihn durchsetzenden Lichtstrom optimal aufnimmt und dieser somit für die Beleuchtungsstärke des Projektionsbildes genutzt wird. Gleichzeitig wird damit ausgeschlossen, daß Bereiche der Pupille von energetisch unwesentlichen Lichtbündeln durchsetzt werden, die am Bildaufbau praktisch nicht nennenswert beteiligt sind, aber die Balance des Abbildungsfehlerausgleichs unnötig erschweren und insgesamt schlechtere Abbildungsqualitäten zur Folge haben.
Eine wesentliche Leistungssteigerung der optischen Abbildung bei technologisch günstigen Gläsern war nur erreichbar durch die geänderte Aufeinanderfolge der positiven und negativen Brechkräfte unter weitgehender Beibehaltung der aberrationsgünstigen Doppel-Gauß-Struktur, wobei das Zulassen größerer Einzelaberrationen der Linsen Voraussetzung war.

Für die Fertigung einer brennweitenabgestuften Serie, die zur Abstimmung auf die Projektionsbedingungen nötig ist, bietet die Verwendung gleicher Glassorten für äquivalente Linsen einen entscheidenden technologischen Vorteil. Darüber hinaus werden nur technologisch günstige, d.h. bearbeitungs- und kostengünstige Gläser verwandt.

Die bevorzugte Anwendung des erfindungsgemäßen Projektionsobjektivs ist die Verwendung des Objektivs für sich allein, d. h. ohne weitere Komponenten. Im Sinne der Erfindung ist es durchaus üblich, mit dem Projektionsobjektiv separate optische Komponenten zu kombinieren. Diese Komponenten können beispielsweise Objektivvorsätze oder Objektivzusätze sein, insbesondere Vorsätze für die Brennweitenvariation und anamorphotische Vorsätze für die Panorama-Breitbildprojektion. Es ist denkbar, Vorsätze mechanisch zu integrieren.

### Ausführungsbeispiele:

### Vorbemerkung:

Die Schnittdarstellungen, die Strahlengänge und die Bewertung der Abbildungsqualität in allen nachfolgenden Figuren beziehen sich aus Zweckmäßigkeitsgründen auf eine gegenüber der Gebrauchslage als Projektionsobjektiv umgekehrte Lage (Abbildung von der Vergrößerungsseite nach der Verkleinerungsseite). Die Eingangsschnittweite ist s=unendlich. Damit wird zwangsläufig das ursprüngliche Objekt zum Bild und umgekehrt. Im Sprachgebrauch wird auf diese Umkehr Bezug genommen. Davon ausgenommen ist die Pupillenabbildung (Gebrauchslagenorientierung). Darauf ist bei den nachfolgenden Ausführungen zu achten.

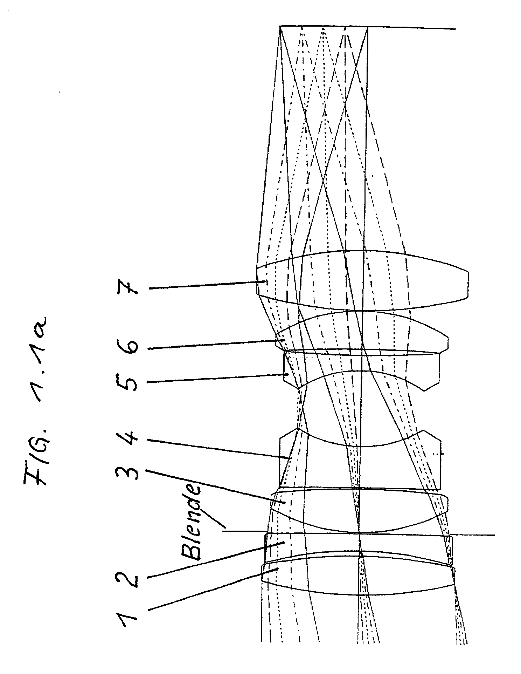

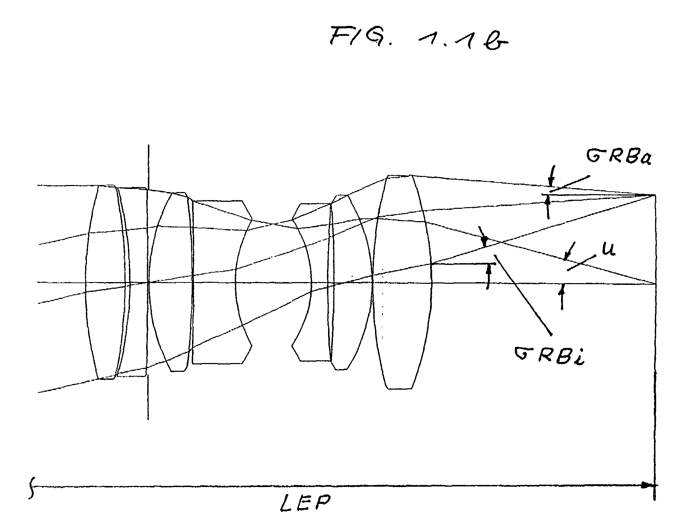

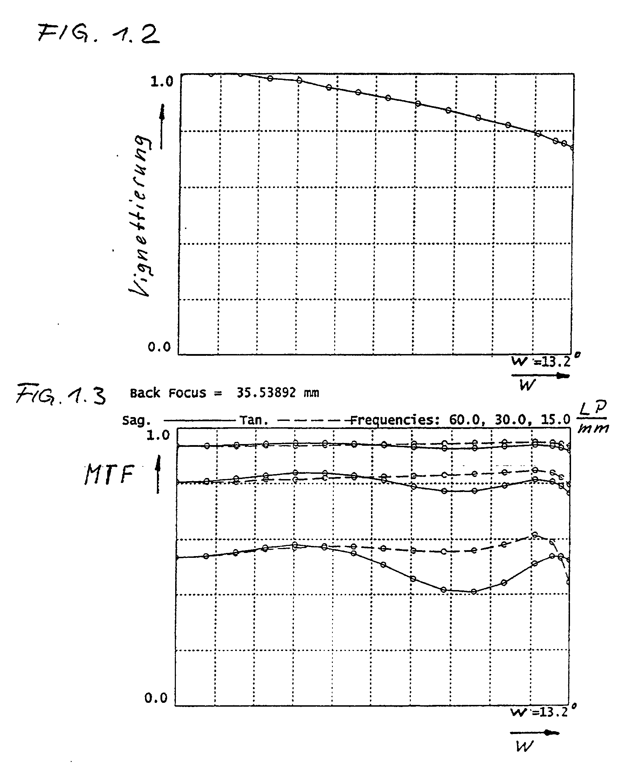

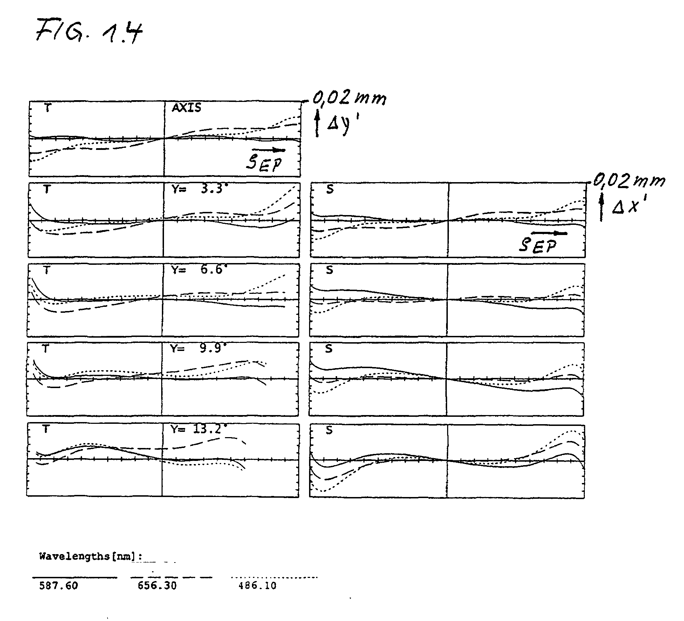

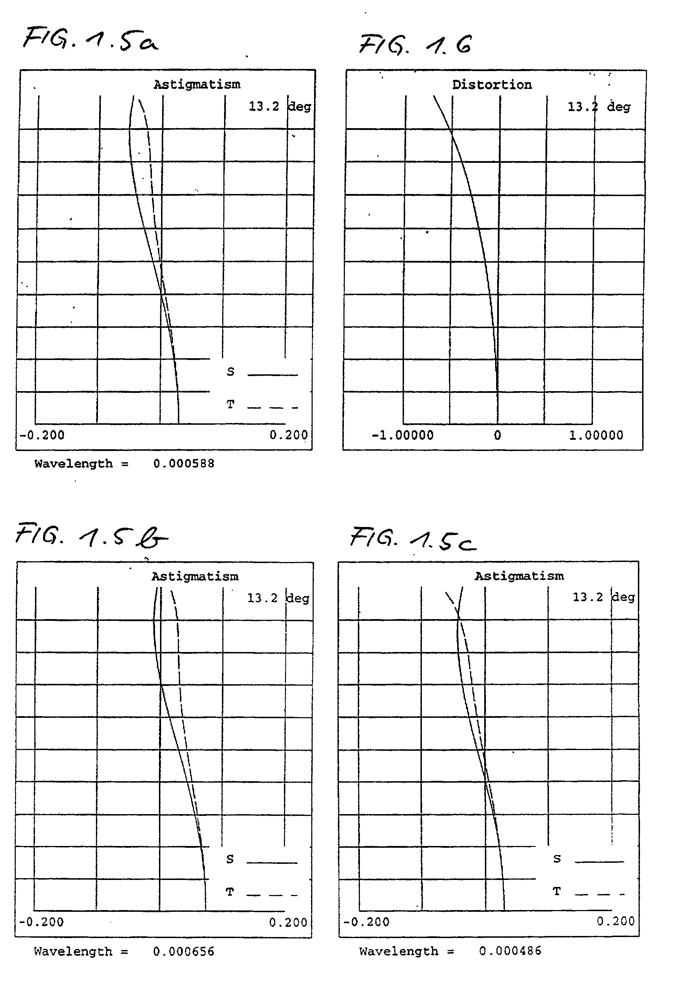

Für das lichtstarke Projektionsobjektiv mit gekrümmter Bildfläche nach Anspruch 3 wird gezeigt in Figur:
1.1a Das Schnittbild des Systems mit der Numerierung der Linsen und der Stahlenverlauf in der meridionalen Ebene für die Abbildung verschiedener Objektpunkte. Die Blende ist zwischen den Linsen 2 und 3 angeordnet.
1.1b Das Schnittbild des Systems mit dem Stahlenverlauf in der meridionalen Ebene für die Abbildung des äußersten Objektpunktes (Diagonale des Objektfeldes) und den charakteristischen Winkeln σRBa und σRBi mit den Werten: σRBa= 4,4° und σRBi=-17,1° für eine Eintrittspupillenlage von LEP=166mm. Damit ist die Größe und Winkellage der Pupille bezüglich der Raumwinkelachse für die Abbildung axialer und außeraxialer Punkte bis hin zum Rand für die Lichtstromverteilung der Kondensorsysteme optimiert. Weiterhin sorgen die Winkelwerte von σRBa und σRBi dafür, daß die energetisch wichtigen Gebiete der feldabhängigen Lichtstromverteilung von der Pupille erfaßt werden, aber auch dafür, daß nicht unnötige, weil energetisch unwesentliche Gebiete der Lichtstromverteilung in der Fläche der Pupille liegen. Durch diese an den tatsächlichen Verhältnissen der Kondensorsysteme orientierte und zielgerichtete Einführung der Vignettierung wird auch verhindert, daß im Korrektionsausgleich, bei der Optimierung der Abbildungsqualität Pupillenflächen die Abbildungsleistung negativ beeinflussen, die ohnehin nur unwesentlich an der Gesamtabbildung beteiligt sind.
1.2 Der Vignettierungsverlauf für die 3 Hauptfarben λ(d)=587.6nm, λ(C)=656,3nm und λ(F)=486,1nm mit den Wichtungen λ(d)=1, λ(C)= λ(F)=0,5 in Abhängigkeit des halben Bildwinkels w (wmax=13,2°). Der minimale Wert der Vignettierung beträgt 74% und wird ganz wesentlich von dem Winkel σRBa mitbestimmt. Deutlich zeigt sich hier im Vergleich zu den vorgenannten Lösungen (DE-OS 3833946), eine wesentlich geringere Vignettierung von etwa 12%, ein weniger stark progressiv abfallender Kurvenverlauf und das bei einer beträchtlich größeren Öffnung.
1.3 Die meridionale (Tan) und sagittale (Sag.) Modulationsübertragungsfunktion MTF für die 3 Hauptfarben λ(d)=587,6nm, λ(C)=656,3nm und λ(F)=486,1nm mit den Wichtungen λ(d)=1, λ(C)= λ(F)=0,5 in Abhängigkeit des halben Bildwinkels w (wmax=13,2°) für die Ortsfrequenzen 60LP/mm, 30LP/mm und 15LP/mm. Der Vergleich zu den vorgenannten Lösungen (DE-OS 3833946) zeigt bei voller Öffnung eine viel bessere und ausgewogenere Abbildungsqualität über das gesamte Bildfeld hinweg. Der Kontrast bleibt über das gesamte Bildfeld für 30LP/mm bei hohem Absolutwert von etwa 80% quasi konstant, während bei den vorgenannten Lösungen bei der geringeren Blendenzahl von k=2,0 ein Kontrastabfall von 20% zu verzeichnen ist und der absolute Kontrastwert auf 60% absinkt.
1.4 Die Queraberrationen Δy'und Δx' für die 3 Hauptfarben in dem meridionalen (T) und sagittalen (S) Schnitt in Abhängigkeit des Eintrittspupillenradiusses ρEP für die halben Bildwinkel w=0, w=0,25 x wmax, w=0,5 x wmax, w=0,75 x wmax als Parameter mit w= wmax=13,2°. Aus diesen Kurven wird das Korrektionsverhalten in Abhängigkeit von den Pupillen- und Feld-Koordinaten für diese 3 Wellenlängen ersichtlich. Sie bestätigen die sehr gute Abbildungsqualität über das gesamte Bildfeld, wie es bereits der Kurvenverlauf der Modulationsübertragungsfunktion zeigte und geben tiefere Einblicke in das Korrektionsverhalten des Systems. Sie zeigen außerdem die sehr gute axiale und laterale Farbkorrektion.
1.5a bis 1.5c der Astigmatismus für die 3 Hauptfarben in Abhängigkeit vom Bildwinkel. Die maximale astigmalische Differenz beträgt 0,03mm. Das ist die maximale Abweichung zwischen den meridionalen und sagittalen Kurvenverläufen, die die Abweichung von der gekrümmten Bildschale darstellen. Das ist ein sehr kleiner Wert, der ohnehin nur in einer bestimmten Zone des Objektfeldes auftritt und am Bildrand wieder zu Null wird.
1.6 Die Verzeichnung in Abhängigkeit vom Bildwinkel für die mittlere Grundfarbe. Die Verzeichnung erreicht am Bildrand eine maximale Abweichung von 0,7%.
   Damit sind auch diese beiden Abbildungsfehler nach den Figuren 1.5a bis 1.5c und 1.6 gegenüber den vorgenannten Lösungen (DE-OS 3833946) besser bzw. gleich.

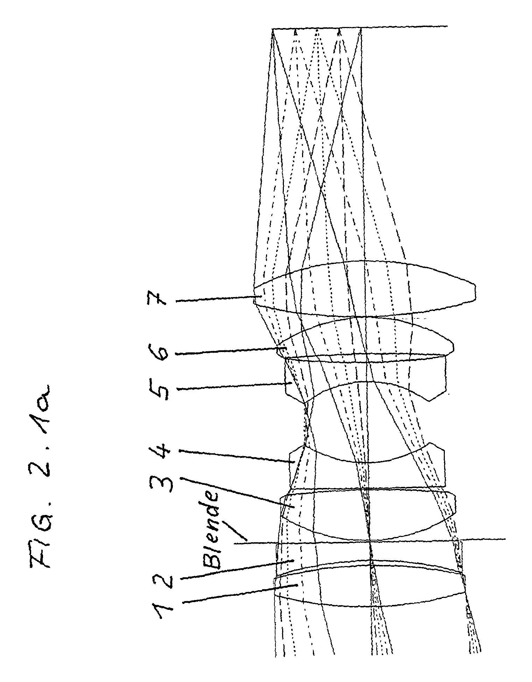

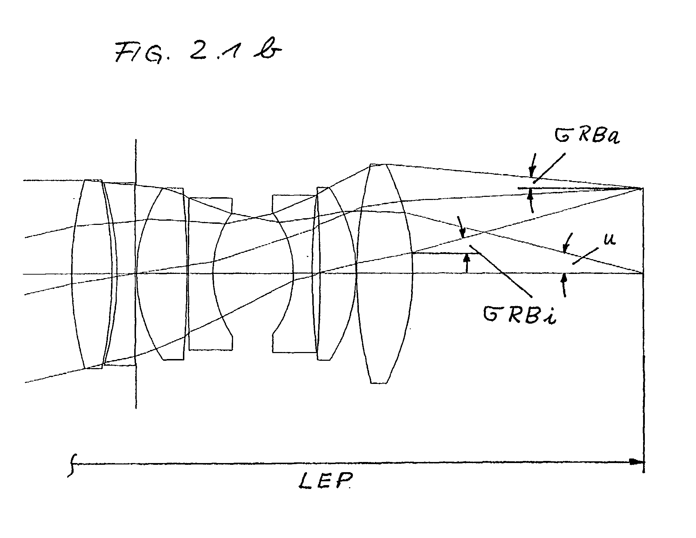

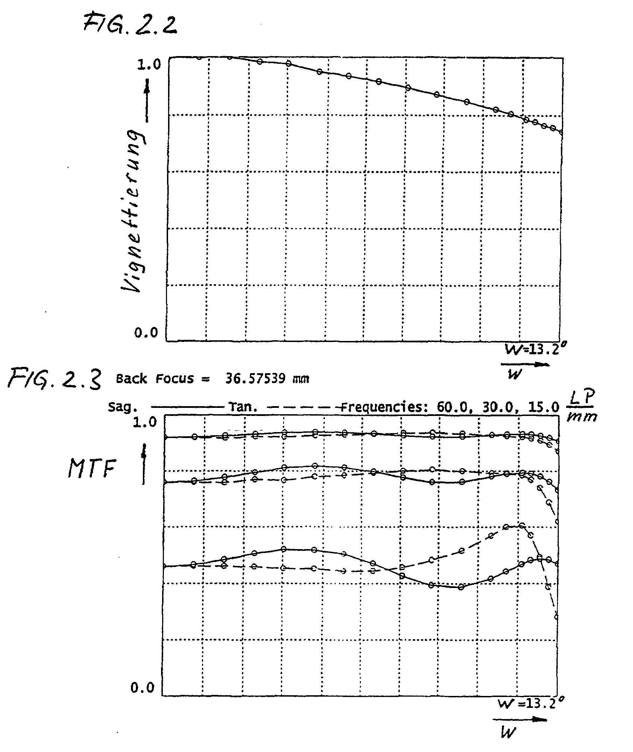

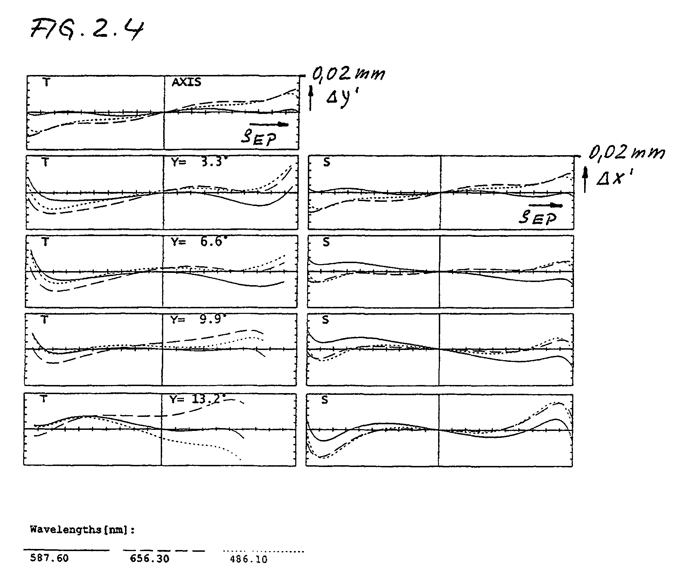

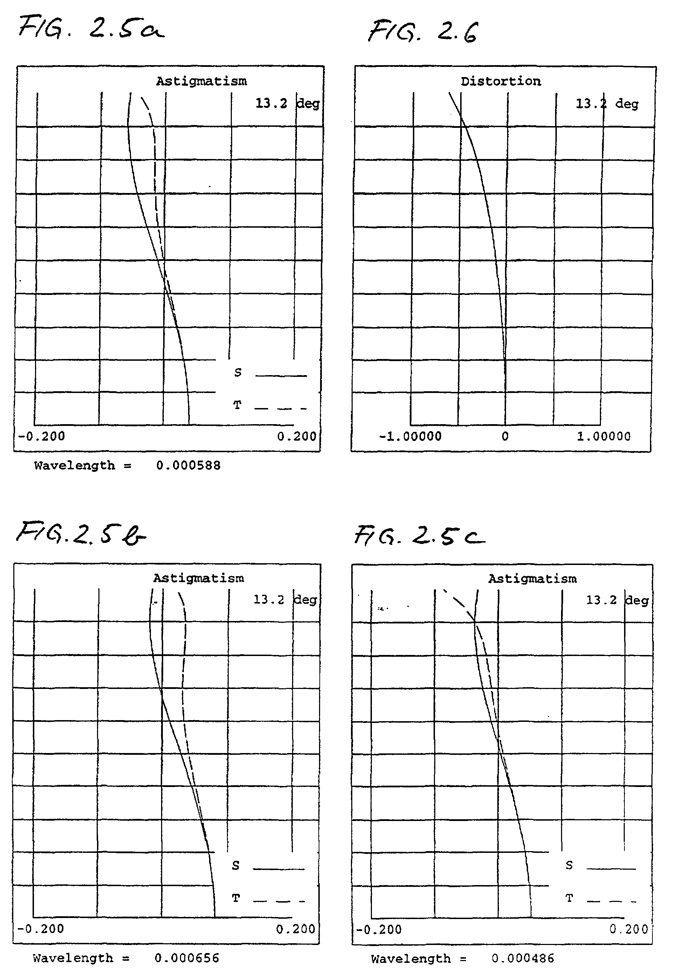

In den Figuren 2.1 bis 2.6 wird das lichtstarke Projektionsobjektiv mit ebenem Objektfeld nach Anspruch 4 in der gleichen Art und Weise beschrieben wie das in den Figuren 1.1 bis 1.6 der Fall gewesen ist. Es wird gezeigt in den Figuren:
2.1a Das Schnittbild des Systems mit der Numerierung der Linsen und der Stahlenverlauf in der meridionalen Ebene für die Abbildung verschiedener Objektpunkte. Die Blende ist zwischen den Linsen 2 und 3 angeordnet.
2.1b Das Schnittbild des Systems mit dem Stahlenverlauf in der meridionalen Ebene für die Abbildung des äußersten Objektpunktes (Diagonale des Objektfeldes) und den charakteristischen Winkeln σRBa und σRBi mit den Werten: σRBa= 5,3° und σRbi=-16,2° für eine Eintrittspupillenlage von LEP=199mm.
2.2 entspricht Figur 1.2. Der minimale Wert der Vignettierung beträgt 74%.
2.3 entspricht Figur 1.3. Der Kontrast bleibt über das gesamte Bildfeld für 30LP/mm bei hohem Absolutwert von etwa 78% quasi konstant.
2.4 entspricht Figur 1.4.
2.5a bis 2.5c entsprechen den Figuren1.5a bis 1.5c. In diesem Falle beziehen sich die Kurven jedoch auf ein ebenes Bildfeld.
2.6 entspricht der Figur 1.6.

Die Kurvenverläufe in den Figuren 2.2 bis 2.6, die alle eine Bewertung der Abbildungsqualität zum Inhalt haben, zeigen, daß die gleiche Güte der Abbildung auch für ebene Bildfelder möglich ist.

## Patentansprüche

1. Projektionsobjektiv, das aus sieben beiderseits an Luft angrenzenden Linsen aufgebaut ist, **gekennzeichnet durch** folgende Bedingungsgleichungen, die in ihrer Gesamtheit erfüllt sein müssen:
u≥12,8°,
100mm ≤ LEP ≤ 400mm,
σRBa ≥ 1°,
σRBi ≤-14°,
wobei
u der Aperturwinkel (2u-Gesamtwinkel) beleuchtungsseitig,
LEP der Abstand der Eintrittspupille (beleuchtungsseitig) von der Objektebene (Lage in Projektionsrichtung vom Bezugspunkt Objektebene entspricht positivem Wert),
σRBa die Winkelneigung des Strahles gegenüber der optischen Achse im Objektraum zwischen Objekt und 1. Linsenfläche des Objektivs, der das Bündel für den Feidrand (äußerer Feldpunkt im Objekt) nach außen hin (von der optischen Achse weg, achsfern) begrenzt und
σRBi die Winkelneigung des Strahles gegenüber der optischen Achse im Objektraum zwischen Objekt und 1. Linsenfläche des Objektivs, der das Bündel für den Feldrand (äußerer Feldpunkt im Objekt) nach innen hin (zur optischen Achse, achsnah) begrenzt, ist,
sowie die Winkel σRBa und σRBi positiv sind, wenn die entsprechenden Strahlen die optische Achse an einem Ort schneiden, der vom Objekt aus gesehen in entgegengesetzter Projektionsrichtung liegt und negativ, wenn sie die optische Achse an einem Ort schneiden, der vom Objekt aus gesehen in der Projektionsrichtung liegt,
mit folgender Anordnung der Linsen in der Reihenfolge vom Bild (Vergrößerungsseite) zum Objekt (Verkleinerungs- und Beleuchtungs-Seite):
- eine erste bikonvexe Linse (1),
- eine zweite negative Linse (2), mit einer konkaven Fläche an der Bildseite.
- eine dritte positive Linse (3), mit einer konvexen Fläche an der Bildseite,
- eine vierte negative Linse (4), mit einer konkaven Fläche auf der Objektseite,
- eine fünfte negative Linse (5), mit einer konkaven Fläche an der Bildseite,
- eine sechste positive Linse (6), mit einer konvexen Fläche auf der Objektseite und
- eine siebte bikonvexe Linse (7).

2. Projektionsobjektiv nach Anspruch 1, **gekennzeichnet durch** folgende Daten der Linsen (1 bis 7):
**Tabelle 1**
| Linsen-Nr. j | Flachen -Nr. i | Radien ri/f' | Dicken und Abstände di/f' | Brechzahlen nd | Abbesche Zahlen υd |
|---|---|---|---|---|---|
| | 1 | 0,89<ri/f'<1,37 | ― | 1,0000 | ― |
| 1 | 2 | -1,34<ri/f'<-0,93 | 0,10<di/f'<0,16 | > 1,60 | <50 |
| | 3 | -0,96<ri/f'<-0,79 | 0,005<di/f'<0.02 | 1,0000 | ― |
| 2 | 4 | -∞≤ri/f'<-2,00 | 0,04<di/f'<0,08 | > 1,59 | < 50 |
| | 5 | 0,43<ri/f'<0.55 | 0.001 <di/f'<0,004 | 1,0000 | ― |
| 3 | 6 | -4,03<ri/f'<-1,09 | 0,11<di/f'<0,20 | > 1,60 | >45 |
| | 7 | -∞≤ri/f'<-2,00 | 0,001<di/f'<0,03 | 1,0000 | ― |
| | | 8,0<ri/f'≤∞ | | | |
| 4 | 8 | 0,30<ri/f'<0,38 | 0,03<di/f'<0,12 | > 1,59 | <40 |
| | 9 | -0,35<ri/f'<-0,27 | 0,16<di/f'<0,26 | 1,0000 | ― |
| 5 | 10 | 0,98<ri/f'<3,73 | 0,03<di/f'<0,10 | > 1,59 | <40 |
| | 11 | -3,15<ri/f'<-1,82 | 0,01<di/f'<0,08 | 1,0000 | ― |
| 6 | 12 | -5,10<ri/f'<-0,40 | 0,08<di/f'<0,18 | > 1,60 | >45 |
| | 13 | 0,85<ri/f'<1,33 | 0,001<di/f'0,004 | 1,0000 | ― |
| 7 | 14 | -1,28<ri/f'<-0,65 | 0,09<di/f'<0,27 | > 1,60 | > 45 |
| und f ' die Brennweite des Systems in mm, j die Nummer der Linsen, i die Nummer der brechenden Fläche, ri der Radius der i-ten brechenden Fläche in mm, di der Scheitelpunkts-Abstand zwischen den Flächen i und i-l in mm, nd die Brechzahl des Glases für die d-Linie und υd die Abbesche Zahl des Glases für die d-Linie bedeuten. | | | | | |

3. Projektionsobjektiv nach Anspruch 1 oder 2, **gekennzeichnet durch** folgende Daten der Linsen (1 bis 7):
**Tabelle 2**
| Linsen-Nr. j | Flächen -Nr. i | Radien ri | Dicken und Abstände di | Brechzahlen nd | Abbesche Zahlen υd |
|---|---|---|---|---|---|
| | 1 | 60,583 | ― | 1,0000 | ― |
| 1 | 2 | -75,475 | 6,215 | 1,68893 | 31,06 |
| | 3 | -55,307 | 0,800 | 1,0000 | ― |
| 2 | 4 | -656,958 | 2,765 | 1,71736 | 29,50 |
| | 5 | 28,998 | 0,200 | 1,0000 | ― |
| 3 | 6 | -120,159 | 6,912 | 1,64000 | 60,05 |
| | 7 | -608,478 | 0,200 | 1,0000 | ― |
| 4 | 8 | 19,868 | 6,617 | 1,67270 | 32,09 |
| | 9 | -17,785 | 12,062 | 1,0000 | ― |
| 5 | 10 | 149,747 | 2,556 | 1,71736 | 29,50 |
| | 11 | -184,302 | 1,000 | 1,0000 | ― |
| 6 | 12 | -25,205 | 6,195 | 1,70000 | 48,06 |
| | 13 | 64,146 | 0,100 | 1,0000 | ― |
| 7 | 14 | -47,864 | 9,399 | 1,70000 | 48,06 |
| f'= 60mm, Relative Öffnung: 1:1,9 Bildwinkel: 2w=26,4 gekrümmtes Objektfeld | | | | | |

4. Projektionsobjektiv nach Anspruch 1 oder 2, **gekennzeichnet durch** folgende Daten der Linsen (1 bis 7):
**Tabelle 3**
| Linsen-Nr. j | Flächen -Nr. i | Radien ri | Dicken und Abstände di | Brechzahlen nd | Abbesche Zahlen υd |
|---|---|---|---|---|---|
| | 1 | 58,672 | ― | 1,0000 | ― |
| 1 | 2 | -69,023 | 6,436 | 1,68893 | 31,06 |
| | 3 | -52,519 | 0,800 | 1,0000 | ― |
| 2 | 4 | -2339,829 | 2,892 | 1,71736 | 29,50 |
| | 5 | 25,774 | 0,200 | 1,0000 | ― |
| 3 | 6 | -140,168 | 7,955 | 1,64000 | 60,05 |
| | 7 | 738,395 | 0,200 | 1,0000 | ― |
| 4 | 8 | 18,251 | 4,000 | 1,67270 | 32,09 |
| | 9 | -16,267 | 12,868 | 1,0000 | ― |
| 5 | 10 | 112,132 | 3.000 | 1,71736 | 29,50 |
| | 11 | -188,336 | 1,300 | 1,0000 | ― |
| 6 | 12 | -24,858 | 5,849 | 1,70000 | 48,06 |
| | 13 | 70,379 | 0,100 | 1,0000 | ― |
| 7 | 14 | -40,309 | 8,858 | 1,70000 | 48,06 |
| f'= 60mm, Relative Öffnung: 1:1,9 Bildwinkel: 2w=26,4 ebenes Objektfeld | | | | | |

## Claims

1. Projection objective lens which is built up from seven lenses interfacing on both sides with air, **characterised by** the following conditional equations, all of which must be met:
u ≥ 12.8°,
100 mm ≤ LEP ≤ 400 mm,
σRBa ≥ 1°,
σRBi ≤ -14°,
where
u is the aperture angle (2u-total angle) on the illumination side,
LEP is the distance of the entrance pupil (on the illumination side) from the object plane (position in the direction of projection from the object plane reference point is a positive value),
σRBa is the angular inclination of the beam relative to the optical axis in the object space between the object and the first lens face of the objective lens system, which space defines the bundle of rays for the field edge (outer field point in the object) in the outward direction (away from the optical axis, off-axis), and
σRBi is the angular inclination of the beam relative to the optical axis in the object space between the object and the first lens face of the objective lens system, which space defines the bundle of rays for the field edge (outer field point in the object) in the inward direction (towards the optical axis, par-axis),
and angles σRBa and σRBi are positive if the relevant beams intersect the optical axis at a point which lies in a direction opposite from the direction of projection when viewed from the object, and are negative if the relevant beams intersect the optical axis at a point which lies in the direction of projection when viewed from the object,
with the lenses arranged in the following order from the picture (enlargement side) to the object (reduction and illumination side):
- a first, biconvex lens (1),
- a second, negative lens (2) having a concave face on the picture side,
- a third, positive lens (3) having a convex face on the picture side,
- a fourth, negative lens (4) having a concave face on the object side,
- a fifth, negative lens (5) having a concave face on the picture side,
- a sixth, positive lens (6) having a convex face on the object side, and
- a seventh, biconvex lens (7).

2. Projection objective lens according to claim 1, **characterised by** the following data for the lenses (1 to 7):
**Table 1**
| Lens no. j | Face no. i | Radius ri/f' | Thickness and spacing di/f' | Refractive index nd | Abbe coefficient vd |
|---|---|---|---|---|---|
| | 1 | 0.89<ri/f'<1.37 | - | 1.0000 | - |
| 1 | 2 | -1.34<ri/f'<-0.93 | 0.10<di/f'<0.16 | > 1.60 | <50 |
| | 3 | -0.96<ri/f'<-0.79 | 0.005<di/f'<0.02 | 1.0000 | - |
| 2 | 4 | -∞≤ri/f'<-2.00 | 0.04<di/f'<0.08 | >1.59 | <50 |
| | 5 | 0.43<ri/f'<0.55 | 0.001<di/f'<0.004 | 1.0000 | - |
| 3 | 6 | -4.03<ri/f'<-1.09 | 0.11<di/f'<0.20 | >1.60 | >45 |
| | 7 | -∞≤ri/f'<-2.00 8.0<ri/f'≤∞ | 0.001<di/f'<0.03 | 1.0000 | - |
| 4 | 8 | 0.30<ri/f'<0.38 | 0.03<di/f'<0.12 | > 1.59 | <40 |
| | 9 | -0.35<ri/f'<-0.27 | 0.16<di/f'<0.26 | 1.0000 | - |
| 5 | 10 | 0.98<ri/f'<3.73 | 0.03<di/f'<0.10 | > 1.59 | <40 |
| | 11 | -3.15<ri/f'<-1.82 | 0.01<di/f'<0.08 | 1.0000 | - |
| 6 | 12 | -5.10<ri/f'<-0.40 | 0.08<di/f'<0.18 | >1.60 | >45 |
| | 13 | 0.85<ri/f'<1.33 | 0.001<di/f'<0.004 | 1.0000 | - |
| 7 | 14 | -1.28<ri/f'<-0.65 | 0.09<di/f'<0.27 | > 1.60 | >45 |
| where f' is the focal length of the system in mm, j is the number of the lens, i is the number of the refracting face, ri is the radius of the ith refracting face in mm, di is the spacing between the vertices of faces i and i-1 in mm, nd is the refractive index of the glass for the d line vd is the Abbe coefficient of the glass for the d line. | | | | | |

3. Projection objective lens according to claim 1 or 2, **characterised by** the following data for the lenses (1 to 7):
**Table 2**
| Lens no. j | Face no. i | Radius ri | Thickness and spacing di | Refractive index nd | Abbe coefficient vd |
|---|---|---|---|---|---|
| | 1 | 60.583 | - | 1.0000 | - |
| 1 | 2 | -75.475 | 6.215 | 1.68893 | 31.06 |
| | 3 | -55.307 | 0.800 | 1.0000 | - |
| 2 | 4 | -656.958 | 2.765 | 1.71736 | 29.50 |
| | 5 | 28.998 | 0.200 | 1.0000 | - |
| 3 | 6 | -120.159 | 6.912 | 1.64000 | 60.05 |
| | 7 | -608.478 | 0.200 | 1.0000 | - |
| 4 | 8 | 19.868 | 6.617 | 1.67270 | 32.09 |
| | 9 | -17.785 | 12.062 | 1.0000 | - |
| 5 | 10 | 149.747 | 2.556 | 1.71736 | 29.50 |
| | 11 | -184.302 | 1.000 | 1.0000 | - |
| 6 | 12 | -25.205 | 6.195 | 1.70000 | 48.06 |
| | 13 | 64.146 | 0.100 | 1.0000 | - |
| 7 | 14 | -47.864 | 9.399 | 1.70000 | 48.06 |
| where f' = 60 mm, relative aperture = 1:1.9 angular field: 2w = 26.4 curved object field | | | | | |

4. Projection objective lens according to claim 1 or 2, **characterised by** the following data for the lenses (1 to 7):
**Table 3**
| Lens no. j | Face no. i | Radius ri | Thickness and spacing di | Refractive index nd | Abbe coefficient vd |
|---|---|---|---|---|---|
| | 1 | 58.672 | - | 1.0000 | - |
| 1 | 2 | -69.023 | 6.436 | 1.68893 | 31.06 |
| | 3 | -52.519 | 0.800 | 1.0000 | - |
| 2 | 4 | -2339.829 | 2.892 | 1.71736 | 29.50 |
| | 5 | 25.774 | 0.200 | 1.0000 | - |
| 3 | 6 | -140.168 | 7.955 | 1.64000 | 60.05 |
| | 7 | 738.395 | 0.200 | 1.0000 | - |
| 4 | 8 | 18.251 | 4.000 | 1.67270 | 32.09 |
| | 9 | -16.267 | 12.868 | 1.0000 | - |
| 5 | 10 | 112.132 | 3.000 | 1.71736 | 29.50 |
| | 11 | -188.336 | 1.300 | 1.0000 | - |
| 6 | 12 | -24.858 | 5.849 | 1.70000 | 48.06 |
| | 13 | 70.379 | 0.100 | 1.0000 | - |
| 7 | 14 | -40.309 | 8.858 | 1.70000 | 48.06 |
| where f' = 60 mm, relative aperture = 1:1.9 angular field: 2w = 26.4 plane object field | | | | | |

## Revendications

1. Objectif de projection qui est constitué par sept lentilles adjacentes de part et d'autre à l'air, **caractérisé par** des équations conditionnelles qui doivent être satisfaites dans leur totalité :
u ≥ 12,8°,
100 mm ≤ LEP ≤ 400 mm,
σRBa ≥ 1°,
σRBi ≤ -14°,
dans lesquelles
u représente l'angle d'ouverture (angle total 2u) côté éclairage,
LEP représente la distance entre la pupille d'entrée (côté éclairage) et le plan de l'objet (la position dans la direction de projection du point de vue du plan de l'objet correspond à une valeur positive),
σRBa représente l'inclinaison du rayon par rapport à l'axe optique dans l'espace occupé par l'objet entre l'objet et la surface de la première lentille de l'objectif qui délimite le faisceau pour le bord de champ (point de champ externe dans l'objet) vers l'extérieur (en s'écartant de l'axe optique, à distance de l'axe) et
σRBi représente l'inclinaison du rayon par rapport à l'axe optique dans l'espace occupé par l'objet entre l'objet et la surface de la première lentille de l'objectif qui délimite le faisceau pour le bord de champ (point de champ externe dans l'objet, vers l'intérieur (en direction de l'axe optique, à proximité de l'axe),
et les angles σRBa et σRBi sont positifs lorsque les rayons correspondants coupent l'axe optique à un endroit qui, vu à partir de l'objet, s'étend dans une direction opposée à la direction de projection et sont négatifs lorsqu'ils coupent l'axe optique à un endroit qui, vu à partir de l'objet, s'étend dans la direction de projection,
avec l'agencement de lentilles indiqué ci-après, dans l'ordre allant de l'image (côté grossissement) à l'objet (côté réduction et éclairage):
- une première lentille biconvexe (1),
- une deuxième lentille négative (2), dont le côté tourné vers l'image présente une surface concave,
- une troisième lentille positive (3), dont le côté tourné vers l'image présente une surface convexe,
- une quatrième lentille négative (4), dont le côté tourné vers l'objet présente une surface concave,
- une cinquième lentille négative (5), dont le côté tourné vers l'image présente une surface concave,
- une sixième lentille positive (6), dont le côté tourné vers l'objet présente une surface convexe,
- une septième lentille biconvexe (7).

2. Objectif de projection selon la revendication 1, **caractérisé par** les données ci-après concernant les lentilles (1 à 7) :
**Tableau 1**
| Lentilles n° j | Surfaces n° i | Rayons ri/f' | Epaisseurs et distances di/f' | Indices de réfraction nd | Nombres d'Abbé υd |
|---|---|---|---|---|---|
| | 1 | 0,89<ri/f'<1,37 | ― | 1,0000 | ― |
| 1 | 2 | -1,34<ri/f'<-0,93 | 0,10<di/f'<0,16 | >1,60 | <50 |
| | 3 | -0,96<ri/f'<-0,79 | 0,005<di/f'<0,02 | 1,0000 | ― |
| 2 | 4 | -∞≤ri/f'<-2,00 | 0,04<di/f'<0,08 | >1,59 | <50 |
| | 5 | 0,43<ri/f'<0,55 | 0,001<di/f'<0,004 | 1,0000 | ― |
| 3 | 6 | -4,03<ri/f'<-1,09 | 0,11<di/f'<0,20 | >1,60 | >45 |
| | 7 | -∞≤ri/f'<-2,00 8,0<ri/f'≤∞ | 0,001<di/f'<0,03 | 1,0000 | -- |
| 4 | 8 | 0,30<ri/f'<0,38 | 0,03<di/f'<0,12 | >1,59 | <40 |
| | 9 | -0,35<ri/f'<-0,27 | 0,16<di/f'<0,26 | 1,0000 | ― |
| 5 | 10 | 0,98<ri/f'<3,73 | 0,03<di/f'<0,10 | >1,59 | <40 |
| | 11 | -3,15<ri/f'<-1,82 | 0,01<di/f'<0,08 | 1,0000 | ― |
| 6 | 12 | -5,10<ri/f'<-0,40 | 0,08<di/f'<0,18 | >1,60 | >45 |
| | 13 | 0,85<ri/f'<1,33 | 0,001<di/f'0,004 | 1,0000 | ― |
| 7 | 14 | -1,28<ri/f'<-0,65 | 0,09<di/f'<0,27 | >1,60 | >45 |
| et f' représente la distance focale du système en mm, j représente le numéro de lentille i représente le numéro de la surface réfringente, ri représente le rayon de la énième surface réfringente en mm, di représente la distance du point d'apex entre les surfaces i et i-1 en mm, nd représente l'indice de réfraction du verre pour la ligne d et υd représente le nombre d'Abbé du verre pour la ligne d. | | | | | |

3. Objectif de projection selon la revendication 1 ou 2, **caractérisé par** les données ci-après concernant les lentilles (1 à 7) :
**Tableau 2**
| Lentilles n° j | Surfaces n° i | Rayons ri | Epaisseurs et distances di | Indices de réfraction nd | Nombres d'Abbé υd |
|---|---|---|---|---|---|
| | 1 | 60,583 | ― | 1,0000 | ― |
| 1 | 2 | -75,475 | 6,215 | 1,68893 | 31,06 |
| | 3 | -55,307 | 0,800 | 1,0000 | ― |
| 2 | 4 | -656,958 | 2,765 | 1,71736 | 29,50 |
| | 5 | 28,998 | 0,200 | 1,0000 | ― |
| 3 | 6 | -120,159 | 6,912 | 1,64000 | 60,05 |
| | 7 | -608,478 | 0,200 | 1,0000 | ― |
| 4 | 8 | 19,868 | 6,617 | 1,67270 | 32,09 |
| | 9 | -17,785 | 12,062 | 1,0000 | ― |
| 5 | 10 | 149,747 | 2,556 | 1,71736 | 29,50 |
| | 11 | -184,302 | 1,000 | 1,0000 | ― |
| 6 | 12 | -25,205 | 6,195 | 1,70000 | 48,06 |
| | 13 | 64,146 | 0,100 | 1,0000 | ― |
| 7 | 14 | -47,864 | 9,399 | 1,70000 | 48,06 |
| f' = 60 mm, ouverture relative : 1:1,9, angle formé par l'image :2w = 26,4, champ de l'objet courbe. | | | | | |

4. Objectif de projection selon la revendication 1 ou 2, **caractérisé par** les données ci-après concernant les lentilles (1 à 7) :
**Tableau 3**
| Lentilles n° j | Surfaces n° i | Rayons ri | Epaisseurs et distances di | Indices de réfraction nd | Nombres d'Abbé vd |
|---|---|---|---|---|---|
| | 1 | 58,672 | ― | 1,0000 | ― |
| 1 | 2 | -69,023 | 6,436 | 1,68893 | 31,06 |
| | 3 | -52,519 | 0,800 | 1,0000 | ― |
| 2 | 4 | -2339,829 | 2,892 | 1,71736 | 29,50 |
| | 5 | 25,774 | 0,200 | 1,0000 | ― |
| 3 | 6 | -140,168 | 7,955 | 1,64000 | 60,05 |
| | 7 | 738,395 | 0,200 | 1,0000 | ― |
| 4 | 8 | 18,251 | 4,000 | 1,67270 | 32,09 |
| | 9 | -16,267 | 12,868 | 1,0000 | ― |
| 5 | 10 | 112,132 | 3,000 | 1,71736 | 29,50 |
| | 11 | -188,336 | 1,300 | 1,0000 | ― |
| 6 | 12 | -24,858 | 5,849 | 1,70000 | 48,06 |
| | 13 | 70,379 | 0,100 | 1,0000 | ― |
| 7 | 14 | -40,309 | 8,858 | 1,70000 | 48,06 |
| f' = 60 mm, ouverture relative : 1:1,9, angle formé par l'image :2w = 26,4, champ de l'objet plan. | | | | | |
